# EUROPEAN PATENT SPECIFICATION

(11) **EP 2 868 619 B1**
(45) Date of publication and mention of the grant of the patent: **29.11.2017**
(21) Application number: 14190435.9
(22) Date of filing: 27.10.2014
(51) Int. Cl.: B66F 9/065, E02F 3/34, E02F 3/28

(54) **Material handling machine**
Materialhandhabungsmaschine
Machine de manipulation de matériau

(30) Priority: 31.10.2013 GB 201319211
(43) Date of publication of application: 06.05.2015
(73) Proprietor: JC Bamford Excavators Ltd, Rocester Uttoxeter Staffordshire ST14 5JP (GB)
(72) Inventor: Hill, Edward, Uttoxeter, Staffordshire ST14 5JP (GB)
(74) Representative: Jones, John Bryn

(56) References cited:
- EP-A2- 0 957 208
- WO-A1-99/01620

## Description

The present invention relates to a material handling machine including an implement manoeuvring apparatus.

The material handling machines are known in particular loading shovel machines. Such loading shovel machines include a material handling implement in the form of a shovel. The shovel is mounted on a linkage mechanism connected to the chassis or other part of the loading shovel machine. The linkage mechanism is operable by hydraulic rams to lift and lower the shovel. The linkage mechanism is also capable of "dumping" the shovel relative to the machine, i.e. tipping the shovel forwards such that loose material contained therein falls out. Additionally the linkage mechanism is capable of "crowding" the shovel, i.e. tipping the shovel backwards so that loose material can be held within the shovel. Typically the shovel will be crowded as the vehicle is being driven into a pile of loose material to be moved. The combination of driving the vehicle into the pile whilst simultaneously crowding the shovel causes the shovel to fill with material. Once this step has been completed, the shovel will be fully crowded and also full of material. However, it will be at a relatively low position, i.e. close to the ground. It is often necessary to load the loose material into a hopper, truck body, or other container at a high level and accordingly the linkage mechanism is operable to lift the shovel from at or near ground position to a higher position. In prior art linkage mechanisms, as the shovel is being lifted the linkage mechanism is such that the shovel tends to tip either forwards or backwards during the lifting operation and this causes some loose material to fall out of the shovel. Dropping of loose material from the shovel during lifting is clearly inefficient.

In prior art machines it is possible to change a shovel for another implement, such as a pair of pallet tines. Under these circumstances, the pallet tines will be arranged horizontally as they are inserted under a pallet for example which may be standing on the ground. Similarly, it is often necessary to lift the pallet to a position significantly above the ground. Prior art linkage mechanisms tend to tip the tines either forwards (in a dump direction) or backwards (in a crowd direction) as the pallet is lifted. Under some circumstances this many cause the pallet to slide off the pallet tines or the load to slide the pallet. Under other circumstances as the pallet is placed at a high level, the pallet tines are no longer horizontal with the ground, and hence they can be difficult to extract from within the pallet. This tends to increase loading/unloading time of the pallets which is therefore inefficient.

EP0957208A1 and WO99/016120 show mechanisms configured to reduce the crowding and dumping of a shovel for the front loading arm of a material handling vehicle during a lift operation.

There is therefore a need for an improved linkage mechanism which dumps and/or crowds an implement mounted thereon less as the implement is lifted when compared to the prior art.

Thus, according to the present invention there is provided a material handling machine as defined in the accompanying claims.

The invention will now be described by way of example only with reference to the accompanying drawings in which:-
Figure 1 is an isometric view of part of a material handling machine according to the present invention,
Figure 2 is a side view of figure 1 with the lifting tines in a lowered position,
Figure 3 is a side view of figure 1 with the lifting tines in a raised position,
Figure 4 shows the material handling machine of figure 1 fitted with a shovel,
Figure 5 is a side view of figure 4 with the shovel in a lowered crowded position,
Figure 6 is a side view of figure 4 with the shovel in a raised crowded position, and
Figure 7 is a side view of figure 4 with the shovel in a raised dumped position.

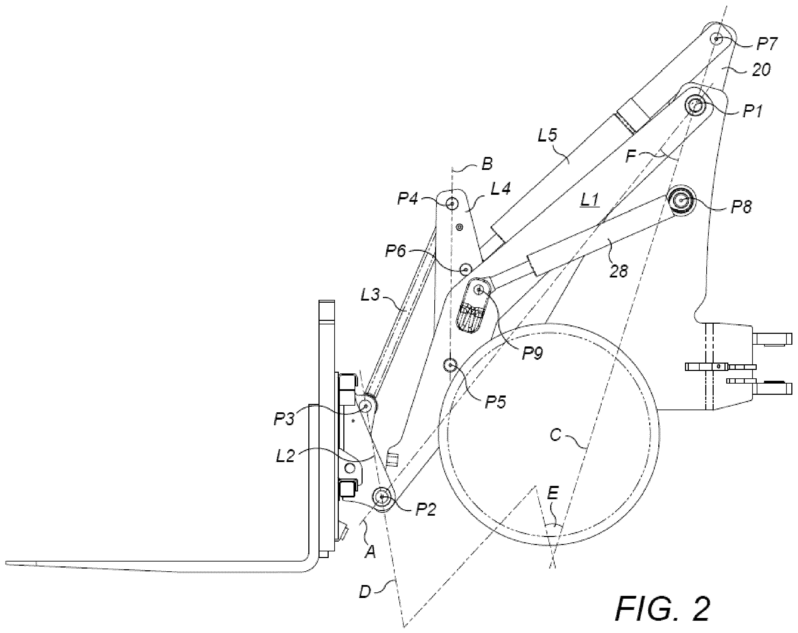

With reference to the figures there is shown a material handling machine 10, only part of which is shown. In this case the material handling machine is a loading shovel machine having a front part 12 which is articulated via a pivot arrangement 14 (only part of which is shown) to a rear part (not shown). The rear part includes an operator cab, an engine and rear ground engaging wheels. The front part 12 includes a front left ground engaging wheel 15 and a front right ground engaging wheel (not shown) which is positioned on the right hand side of the front part 12 opposite the front left ground engaging wheel 15. Mounted on front part 12 is an implement manoeuvring apparatus 16 (also known as linkage arrangement) on the front of which can be mounted a materials handling implement 18, in this case a pair of pallet tines. The apparatus 16 is defined by a set of links interconnected by pivots as will be further described below. As can be seen in figure 2, the apparatus 16 has a first link L1, a second link L2, a third link L3, a fourth link L4, a fifth link L5 and a support 20.

The first link is defined by a pair of spaced apart links L1A and LIB. The second link defines part of a quick attach structure to which implements, such as pallet tines 18 can be quickly attached and detached. The third link is defined by a rod. The fourth link is defined by a pair of spaced apart plates L4A and L4B. The fifth link is defined by an adjustable link, in this case by a hydraulically actuated ram 22. The support 20 is defined by a pair of plates 24A and 24B and by a central plate 25. Plates 24A, 24B and 25 are all secured together to form the support 20.

The first link is pivotally mounted on the support 20 at a first pivot P1. The second link is pivotally mounted relative to the first link at a second pivot P2. The third link is pivotally mounted relative to the second link at a third pivot P3. The fourth link is pivotally mounted relative to the third link at a fourth pivot P4. The fourth link is also pivotally mounted relative to the first link at a fifth pivot P5. The fifth link is pivotally mounted to the fourth link at a sixth pivot P6. The fifth link is also pivotally mounted on the support at a seventh pivot P7.

The fifth pivot P5 is located on the first link between the first and second pivots. A first line A is defined between the first and second pivots.

The sixth pivot is located on the fourth link between the fourth and fifth pivots. A second line B is defined between the fourth and the fifth pivots.

The fifth pivot is positioned on a same side of the first line (A) as the fourth pivot. The perpendicular distance between the first line A and the fifth pivot is 95.2 mm i.e. 0.057 times L (see below) or 0.131 M (see below).

The sixth pivot is positioned on a same side of the second line (B) as the seventh pivot. The perpendicular distance between the second line B and the sixth pivot is 47.9 mm i.e. 0.029 times L (see below) or 0.066 times M (see below).

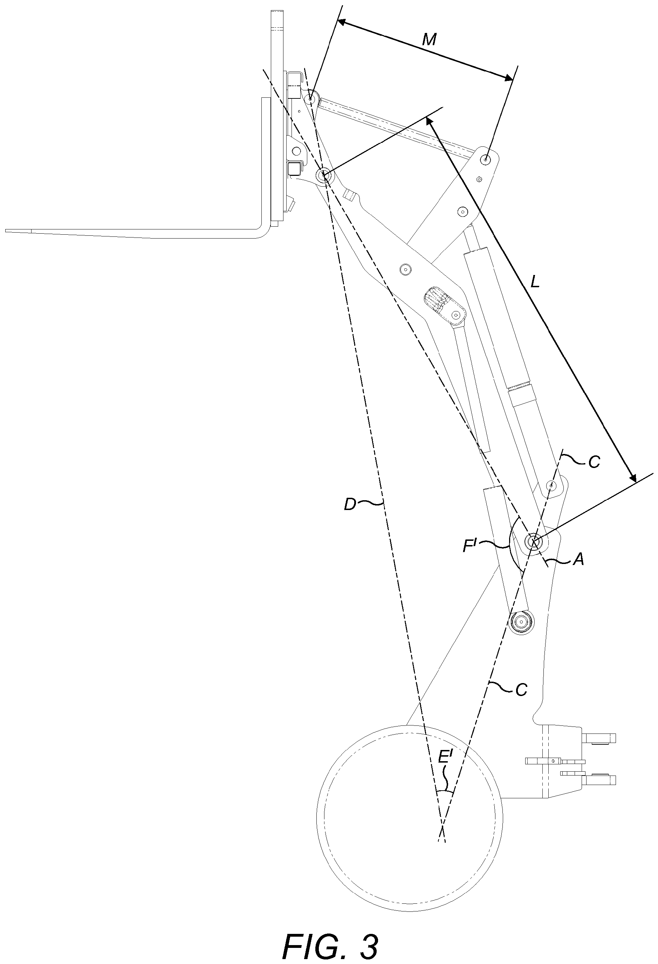

The distance between the first and second pivots is a fixed distance L (see figure 3), which in this example is 1655 mm.

The distance between certain other pivots is a fixed percentage of the distance between the first and second pivots, thus:-
the distance between the first and fifth pivots is 1178.8 mm i.e. 0.712 times L
the distance between the second and fifth pivots is 489.3 mm i.e. 0.296 times L
the distance between the second and third pivots is 303 mm i.e. 0.183 times L
the distance between the third and fourth pivots is 725 mm i.e. 0.438 times L
the distance between the fourth and sixth pivots is 212.9 mm i.e. 0.129 times L
the distance between the fifth and sixth pivots is 318 mm i.e. 0.192 times L
the distance between the first and seventh pivots is 230 mm i.e. 0.139 times L

The second, third, fourth and fifth pivots together form a quadrilateral in which all internal angles are less than 180°. The first, fifth, sixth and seventh pivots together form quadrilateral in which all internal angles are less than 180°. The seventh pivot P7 is positioned higher than the first pivot P1.

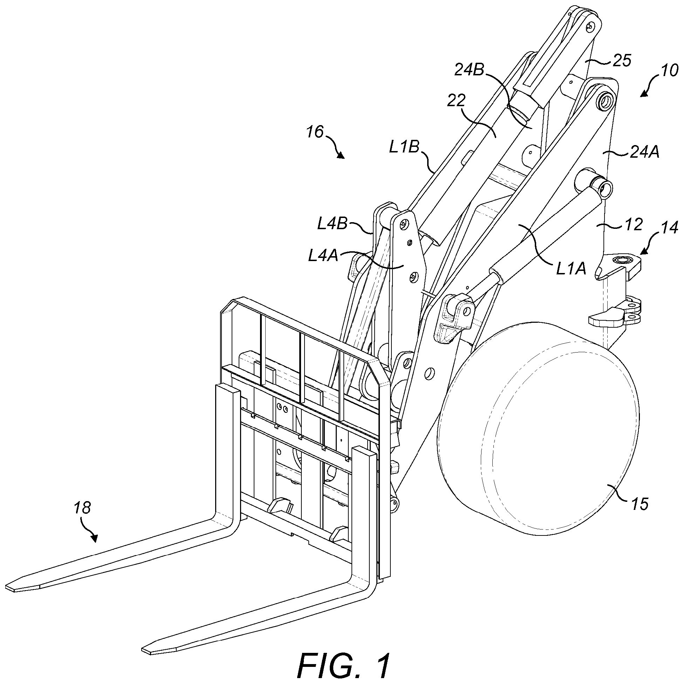

A lift ram 28 is pivotally mounted at one end to the support 20 at pivot P8 and is pivotally mounted to the first link L1 at pivot P9. A further lift ram 29 is mounted on the right hand side of link LIB and is similarly pivotally mounted to the support and to the first link. The lift rams 28 and 29 can be operated so as to extend, thereby causing the material handling implement 18 to be lifted, for example to the position shown in figure 3 or any intermediate position. The material handling implement 18 can be lowered from figure 3 position to the figure 1 position or any intermediate position by contracting the lift rams 28 and 29.

Figure 2 shows the implement manoeuvring apparatus 16 in a lowered position. In this position a line C drawn between the first and seventh pivots intersects a line D drawn between the second and third pivots at an angle E, which is 27.55°. As shown in figure 2 the angle F between lines A and C is 21.24°.

As shown in figure 3, in the raised position lines C and D intersect at angle E', which is 25.95°, this being less than 4° less than angle E as shown on figure 2. In other words when moving from the figure 2 position to the figure 3 position, the pallet tines 18 have "crowded" i.e. tipped backwards (rotated clockwise when viewing the figures) less than 4 degrees. In both the figure 2 and figure 3 position the length of the fifth link L5 is the same, i.e. in both figure 2 and figure 3 position the ram 22 had not been extended or contracted. As shown in figures 2 and 3 the length of the fifth link is 1125 mm i.e. 0.680 times L.

Furthermore, an analysis of the geometry shows that when moving from the figure 2 position to the figure 3 position (whilst maintaining the length of the fifth link the same, i.e. whilst not extending or reducing the length of the ram 22) the second link (and hence the pallet tines 18) do not "dump" i.e. tip forwards or rotate anticlockwise during any part of the movement from the figure 2 position to the figure 3 position.

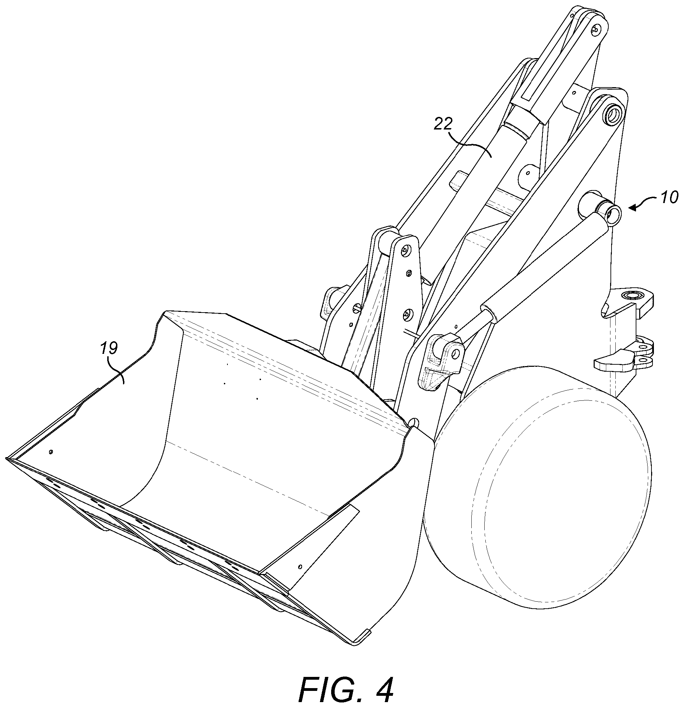

As will be appreciated, the linkage arrangement 16 has been designed to lift the pallet tines (and hence any pallet mounted thereon) substantially parallel to the ground. This reduces the risk of a pallet or a load on a pallet falling. It also results in faster loadings/unloading since the pallet tines remain substantially parallel to the ground at all positions during lift, this means that the pallet tines will remain substantially parallel to the ground at whatever height a pallet is picked up from, and will also remain parallel to the ground at whatever height a pallet is deposited at. This in turn means that the material handling operator does not need to adjust the angle of the pallet by lengthening or shortening the ram 22 (the fifth link) in order to ensure the tines can be driven under the pallet when picking up the pallet or withdrawn from under the pallet when having just deposited a pallet. This results in faster operation. With reference to figures 4 to 7 there is shown the material handling machine 10 of figure 1. In this case the pallet tines 18 have been removed and replaced with a shovel 19. This is a relatively simple task for the operator to achieve since the second link 2 has a "quick hitch" attachment onto which can be mounted either the pallet tines 18 or the shovel 19.

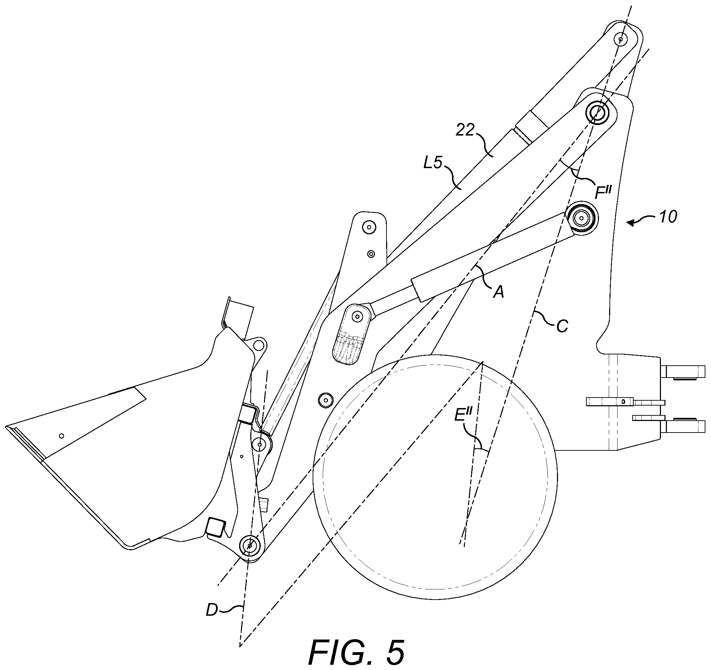

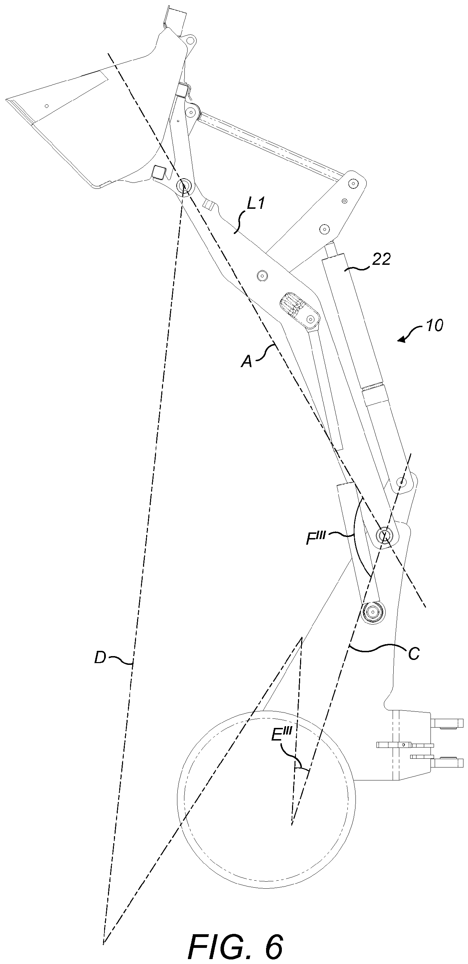

A comparison between figure 5 and figure 2 shows that in figure 5 the fifth link L5 has been shortened when compared to figure 2. The length of the fifth link in the figure 5 and figure 6 position is 1088.3 mm i.e. 0.658 times L. In figure 5 the shovel is fully "crowded" and the angle E" between lines C and D is 12.02°. In figure 5 the angle F" is 21.24°.

Figure 6 shows the shovel 19 in a fully raised position wherein angle E'" is 12.86° and angle F''' is 132.72°. As will be appreciated, in moving from the figure 5 position to the figure 6 position the shovel 19 has dumped by only 0.8°, i.e. less than 1°.

Furthermore, an analysis of the geometry shows that when moving from the figure 5 position to the figure 6 position the second link, and hence the bucket 19 does not "dump" i.e. tip forwards by more than 3.5° and it does not "crowd" i.e. tip backwards by more than 0.2°. Accordingly, in moving from the figure 5 position to the figure 6 position the angle of the bucket remains substantially the same and therefore less loose material and the like will be spilled from the bucket during the lift than when compared with the prior art.

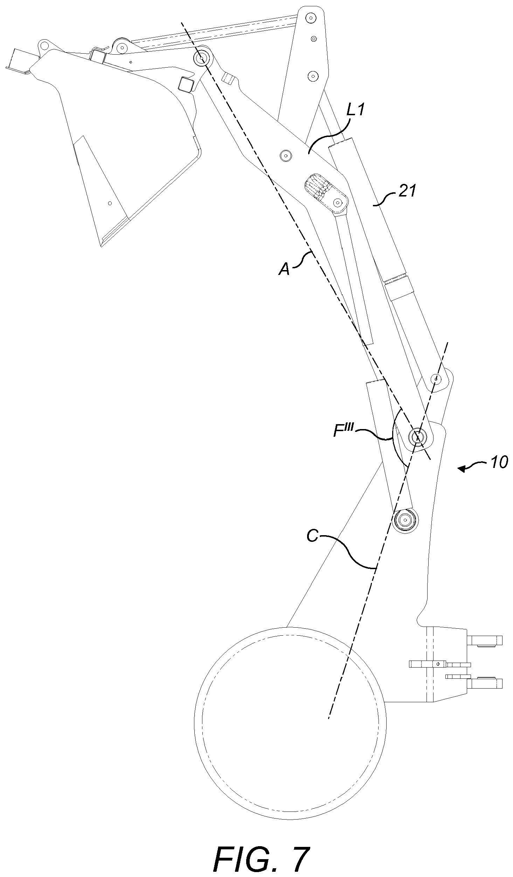

Consideration of figure 7 shows that the first link L1 is in the same position as shown in figure 6. However, in figure 7 the ram 22 has been extended so as to rotate the fourth link anticlockwise. This in turn has caused the third link to move to the left when viewing the drawings resulting in the bucket rotating anticlockwise about the second pivot, i.e. rotating in a dump direction.

In the above analysis, the distances between various pivots have been shown as a proportion of the largest distance between any two pivots. Thus, the largest distance between any two pivots is the distance between the first and second pivots and this distance is defined as distance L. Consequently, for example the distance between, say, the first and fifth pivots can be described as 0.712 L. In this analysis the "master" pivot distance is the distance L between the first and second pivots.

An alternative analysis can be carried out by choosing a different "master" pivot distance, i.e. a distance between a different pair of pivots.

The following analysis uses the distance between the third and fourth pivots as the "master" pivot distance.

The distance between the third and fourth pivots is a fixed distance M (see figure 3), which (as mentioned above) is 725 mm.

The distance between certain other pivots is a fixed percentage of the distance between the third and fourth pivots, thus:-
the distance between the first and second pivots is (as mentioned above) 1655 mm, i.e. 2.283 times M
the distance between the first and fifth pivots is (as mentioned above) 1178.8 mm, i.e. 1.626 times M
the distance between the second and fifth pivots is (as mentioned above) 489.3 mm, i.e. 0.675 times M
the distance between the second and third pivots is (as mentioned above) 303 mm, i.e. 0.418 times M
the distance between the fourth and sixth pivots is (as mentioned above) 212.9 mm, i.e. 0.294 times M
the distance between the fifth and sixth pivots is (as mentioned above) 318 mm, i.e. 0.439 times M
the distance between the first and seventh pivots is (as mentioned above) 230 mm, i.e. 0.317 times M

As shown in figures 2 and 3 the length of the fifth link is (as mentioned above) 1,125 mm i.e. 1.552 M.

As shown in figures 5 and 6 the length of the fifth link is (as mentioned above) 1.088.3 mm, i.e. 1.501 M.

In a second embodiment (not shown) the first link L1 can be replaced with a longer link having dimensions as follows:-
the distance between the first and second pivots is 1890 mm i.e. 2.607 M
the distance between the first and fifth pivots is 1425 mm i.e. 1.966 M
the distance between the second and fifth pivots is 481 mm i.e. 0.663 M

The fifth pivot is positioned on a same side of the first line (A) as the fourth pivot. The perpendicular distance between the first line A and the fifth pivot is 106 mm i.e. 0.146 times M.

An analysis of the geometry of such an arrangement shows that moving from a lowered position (the equivalent of the figure 2 position) where the first line A is angled by 23.24° relative to line C to a raised position (the equivalent of the figure 3 position) where the first line A is angled by 127.07° relative to line C whilst the distance between the sixth and seventh pivots remains at 1350.35 mm (i.e. 1.863 M) results in the second link crowding by less than 2° e.g. less than 4° between the lowered and raised positions. At every intermediate position the second link has not dumped. At every intermediate position the second link has crowded by less than 2° e.g. has crowded by less than 4°.

An analysis of the geometry of such an arrangement shows that moving from a lowered position (the equivalent of the figure 5 position) where the first line A is angled by 23.24° relative to line C and a raised position (the equivalent of the figure 6 position) where the first line A is angled by 127.07° relative to line C whilst the distance between the sixth and seventh pivots remains at 1,326 mm, i.e. 1.829 M results in the second link crowding by less than 0.5° e.g. less than 1° between the lowered and raised positions. At every intermediate position the second link has not dumped by more than 2.5° e.g. has not dumped by more than 3.5°. At every intermediate position the second link has not crowded by more than 0.5° e.g. has not crowded by more than 4°.

## Claims

1. A material handling machine (10) including an implement manoeuvring apparatus (16), the implement manoeuvring apparatus including
a support (20),
a first link (L1),
a second link (L2),
a third link (L3),
a fourth link (L4) and
a fifth link (L5),
the first link (LI) being pivotally mounted relative to the support at a first pivot (P1),
the second link (L2) being pivotally mounted relative to the first link (L1) at a second pivot (P2),
the third link (L3) being pivotally mounted relative to the second link (L2) at a third pivot (P3),
the fourth link (L4) being pivotally mounted relative to the third link (L3) at a fourth pivot (P4),
the fourth link (L4) being pivotally mounted relative to the first link (L1) at a fifth pivot (P5),
the fifth link (L5) being pivotally mounted relative to the fourth link (L4) at a sixth pivot (P6),
the fifth link (L5) being pivotally mounted relative to the support at a seventh pivot (P7),
the fifth pivot (P5) being located on the first link (L1) between the first and second pivots,
the sixth pivot (P6) being located on the fourth link (L4) between the fourth and fifth pivots,
a distance between the third and fourth pivots being a fixed distance M,
a distance between the first and second pivots being a fixed distance,
a distance between the first and fifth pivots being a fixed distance,
a distance between the second and fifth pivots being a fixed distance,
**characterised by** a distance between the second and third pivots being a fixed distance 0.418 M ± 2%,
a distance between the fourth and sixth pivots being a fixed distance 0.294 M ± 2%,
a distance between the fifth and sixth pivots being a fixed distance 0.439 M ± 2%,
a distance between the first and seventh pivots being a fixed distance 0.317 M ± 2%,
a distance between the sixth and seventh pivots being capable of being varied,
a first line (A) being defined between the first and second pivots, the fifth pivot (P5) being positioned on a same side of the first line (A) as the fourth pivot (P4),
a second line (B) being defined between the fourth and fifth pivots, the sixth pivot (P6) being positioned on a same side of the second line (B) as the seventh pivot (P7), a perpendicular distance between the second line and the sixth pivot (P6) is 0.066 M ± 10%,
the second, third, fourth and fifth pivots (P2, P3, P4, P5) forming a quadrilateral in which all internal angles are less than 180°,
the first, fifth, sixth and seventh pivots (P1, P5, P6, P7) forming a quadrilateral in which all internal angles are less than 180°,
the seventh pivot (P7) being positioned higher than the first pivot (P1),
the mechanism having:
a first position where the first line (A) is angled by 24° (F) relative to a line (C) drawn between the first and seventh pivots, and the distance between the sixth and seventh pivots is a first distance and a line (C) drawn between the first and seventh pivots is angled at a first angle (E) relative to a line drawn between the second and third pivots, and
a second position where the first line (A) is angled by 127° (F') relative to the line (C) drawn between the first and seventh pivots, and the distance between the sixth and seventh pivots is said first distance and wherein the second link(L2) has crowded less than 4° relative to the first angle of the second link (L2).

2. A material handling machine (10) as defined in claim 1 wherein the apparatus has a plurality of intermediate positions between the first position and the second position and at every intermediate position the distance between the sixth pivot (P6) and the seventh pivot (P7) is said first distance and the second link (L2) has not dumped relative to the first angle.

3. A material handling machine (10) as defined in claim 2 wherein at every intermediate position the second link (L2) has not crowded by more than 4° relative to the first angle.

4. A material handling machine (10) including an implement manoeuvring apparatus (16), the implement manoeuvring apparatus (16) including:
a support (20),
a first link (L1),
a second link (L2),
a third link (L3),
a fourth link (L4) and
a fifth link (L5),
the first link (L1) being pivotally mounted relative to the support at a first pivot (P1),
the second link (L2) being pivotally mounted relative to the first link (L1) at a second pivot (P2),
the third link (L3) being pivotally mounted relative to the second link (L2) at a third pivot (P3),
the fourth link (L4) being pivotally mounted relative to the third link (L3) at a fourth pivot (P4),
the fourth link (L4) being pivotally mounted relative to the first link (L1) at a fifth pivot (P5),
the fifth link (L5) being pivotally mounted relative to the fourth link (L4) at a sixth pivot (P6),
the fifth link (L5) being pivotally mounted relative to the support at a seventh pivot (P7),
the fifth pivot (P5) being located on the first link (L1) between the first and second pivots,
the sixth pivot (P6) being located on the fourth link (L4) between the fourth and fifth pivots,
a distance between the third and fourth pivots being a fixed distance M,
a distance between the first and second pivots being a fixed distance,
a distance between the first and fifth pivots being a fixed distance,
a distance between the second and fifth pivots being a fixed distance,
**characterised by** a distance between the second and third pivots being a fixed distance 0.418 M ± 2%,
a distance between the fourth and sixth pivots being a fixed distance 0.294 M ± 2%,
a distance between the fifth and sixth pivots being a fixed distance 0.439 M ± 2%,
a distance between the first and seventh pivots being a fixed distance 0.317 M ± 2%,
a distance between the sixth and seventh pivots being capable of being varied,
a first line (A) being defined between the first and second pivots, the fifth pivot (P5) being positioned on a same side of the first line (A) as the fourth pivot (P4),
a second line (B) being defined between the fourth and fifth pivots, the sixth pivot (P6) being positioned on a same side of the second line (B) as the seventh pivot (P7), a perpendicular distance between the second line and the sixth pivot (P6) is 0.066 M ± 10%,
the second, third, fourth and fifth pivots (P2, P3, P4, P5) forming a quadrilateral in which all internal angles are less than 180°,
the first, fifth, sixth and seventh pivots (P1, P5, P6, P7) forming a quadrilateral in which all internal angles are less than 180°,
the seventh pivot (P7) being positioned higher than the first pivot (P1),
the mechanism having:
a first position where the first line (A) is angled by 24° (F") relative to a line (C) drawn between the first and seventh pivots, and the distance between the sixth and seventh pivots is a second distance and a line (C) drawn between the first and seventh pivots is angled at a first angle (E) relative to a line drawn between the second and third pivots, and
a second position where the first line (A) is angled by 127° (F"') relative to the line (C) drawn between the first and seventh pivots, and the distance between the sixth and seventh pivots is said second distance and wherein the second link (L1) has dumped less than 1° relative to the first angle of the second link, and/or has crowded less than 0.5° relative to the first angle of the second link (L2).

5. A material handling machine (10) as defined in claim 4 wherein the apparatus has a plurality of intermediate positions between the first position and the second position and at every intermediate position the distance between the sixth pivot (P6) and the seventh pivot (P7) is said second distance and the second link (L2) has not dumped by more than 3.5° relative to the first angle.

6. A material handling machine (10) as defined in claim 5 wherein at every intermediate position the second link (L2) has not crowded by more than 0.5° relative to the first angle.

7. A material handling machine (10) as defined in claim 1 or 4 wherein:-
the distance between the first and second pivots is between 2.283 M ± 0.3% and 2.607 M ± 0.3%, and/or
the distance between the first and fifth pivots is between 1.626 M ± 0.4% and 1.965 M ± 0.4%, and/or
the distance between the second and fifth pivots is between 0.675 M ± 1.0% and 0.663 M ± 1.0%, and/or
a perpendicular distance between the first line (A) and the fifth pivot is between 0.131 M ± 5% and 0.146 M ± 5%.

8. A material handling machine (10) as defined in claim 1 or 4 wherein:-
the distance between the first and second pivots (P1, P2) is 2.283 M ± 0.3%, and/or
the distance between the first and fifth pivots (P1, P5) is 1.626 M ± 0.4%, and/or
the distance between the second and fifth pivots (P2, P5) is 0.675 M ± 1.0%, and/or
a perpendicular distance between the first line (A) and the fifth pivot (P5) is 0.131 M ± 5%.

9. A material handling machine (10) as defined in claim 1 or 8 wherein the first distance is 1.552 M.

10. A material handling machine (10) as defined in claim 1 or 8 when dependent upon claim 4 wherein the second distance is 1.501 M.

11. A material handling machine (10) as defined in claim 1 or 4 wherein:-
the distance between the first and second pivots (P1, P2) is 2.607 M ± 0.3%, and/or
the distance between the first and fifth pivots (P1, P5) is 1.965 M ± 0.4%, and/or
the distance between the second and fifth pivots (P2, P5) is 0.663 M ± 1.0%, and/or
a perpendicular distance between the first line (A) and the fifth pivot is 0.146 M ± 5%.

12. A material handling machine (10) as defined in claim 1 or 11 wherein the first distance is 1.863 M.

13. A material handling machine (10) as defined in claim 1 or 11 when dependent upon claim 4 wherein the second distance is 1.829 M.

## Patentansprüche

1. Materialhandhabungsmaschine (10), enthaltend ein Werkzeugmanövriergerät (16), das Werkzeugmanövriergerät enthaltend:
eine Halterung (20),
ein erstes Verbindungsglied (L1),
ein zweites Verbindungsglied (L2),
ein drittes Verbindungsglied (L3),
ein viertes Verbindungsglied (L4) und
ein fünftes Verbindungsglied (L5),
wobei das erste Verbindungsglied (L1) schwenkbar relativ zur Halterung an einem ersten Drehpunkt (P1) befestigt ist,
das zweite Verbindungsglied (L2) schwenkbar relativ zum ersten Verbindungsglied (L1) an einem zweiten Drehpunkt (P2) befestigt ist,
das dritte Verbindungsglied (L3) schwenkbar relativ zum zweiten Verbindungsglied (L2) an einem dritten Drehpunkt (P3) befestigt ist,
das vierte Verbindungsglied (L4) schwenkbar relativ zum dritten Verbindungsglied (L3) an einem vierten Drehpunkt (P4) befestigt ist,
das vierte Verbindungsglied (L4) schwenkbar relativ zum ersten Verbindungsglied (L1) an einem fünften Drehpunkt (P5) befestigt ist,
das fünfte Verbindungsglied (L5) schwenkbar relativ zum vierten Verbindungsglied (L4) an einem sechsten Drehpunkt (P6) befestigt ist,
das fünfte Verbindungsglied (L5) schwenkbar relativ zur Halterung an einem siebten Drehpunkt (P7) befestigt ist,
der fünfte Drehpunkt (P5) am ersten Verbindungsglied (L1) zwischen dem ersten und zweiten Drehpunkt angeordnet ist,
der sechste Drehpunkt (P6) am vierten Verbindungsglied (L4) zwischen dem vierten und fünften Drehpunkt angeordnet ist,
der Abstand zwischen dem dritten und vierten Drehpunkt ein festgelegter Abstand M ist,
der Abstand zwischen dem ersten und zweiten Drehpunkt ein festgelegter Abstand ist,
der Abstand zwischen dem ersten und fünften Drehpunkt ein festgelegter Abstand ist,
der Abstand zwischen dem zweiten und fünften Drehpunkt ein festgelegter Abstand ist,
**dadurch gekennzeichnet, dass** der Abstand zwischen dem zweiten und dritten Drehpunkt ein festgelegter Abstand 0,418 M ± 2 % ist,
der Abstand zwischen dem vierten und sechsten Drehpunkt ein festgelegter Abstand 0,294 M ± 2 % ist,
der Abstand zwischen dem fünften und sechsten Drehpunkt ein festgelegter Abstand 0,439 M ± 2 % ist,
der Abstand zwischen dem ersten und siebten Drehpunkt ein festgelegter Abstand 0,317 M ± 2 % ist,
der Abstand zwischen dem sechsten und siebten Drehpunkt variiert werden kann,
eine erste Linie (A) zwischen dem ersten und zweiten Drehpunkt definiert ist, der fünfte Drehpunkt (P5) auf derselben Seite der ersten Linie (A) wie der vierte Drehpunkt (P4) angeordnet ist,
eine zweite Linie (B) zwischen dem vierten und fünften Drehpunkt definiert ist, der sechste Drehpunkt (P6) auf derselben Seite der zweiten Linie (B) wie der siebte Drehpunkt (P7) angeordnet ist, ein senkrechter Abstand zwischen der zweiten Linie und dem sechsten Drehpunkt (P6) 0,066 M ± 10 % beträgt,
der zweite, der dritte, der vierte und der fünfte Drehpunkt (P2, P3, P4, P5) ein Viereck bilden, bei dem alle Innenwinkel kleiner als 180° sind,
der erste, der fünfte, der sechste und der siebte Drehpunkt (P1, P5, P6, P7) ein Viereck bilden, bei dem alle Innenwinkel kleiner als 180° sind,
der siebte Drehpunkt (P7) höher angeordnet ist als der erste Drehpunkt (P1),
wobei der Mechanismus aufweist:
eine erste Position, an der die erste Linie (A) um 24° (F) relativ zu einer zwischen dem ersten und siebten Drehpunkt gezogenen Linie (C) abgewinkelt ist, und der Abstand zwischen dem sechsten und dem siebten Drehpunkt ein erster Abstand ist und eine zwischen dem ersten und siebten Drehpunkt gezogene Linie (C) in einem ersten Winkel (E) relativ zu einer zwischen dem zweiten und dem dritten Drehpunkt gezogenen Linie angewinkelt ist, und
eine zweite Position, an der die erste Linie (A) um 127° (F') relativ zu der zwischen dem ersten und siebten Drehpunkt gezogenen Linie (C) abgewinkelt ist, und der Abstand zwischen dem sechsten und dem siebten Drehpunkt der erste Abstand ist und wobei sich das zweite Verbindungsglied (L2) weniger als 4° relativ zum ersten Winkel des zweiten Verbindungsglieds (L2) rückgekippt hat.

2. Materialhandhabungsmaschine (10) nach Anspruch 1, wobei das Gerät eine Vielzahl von Zwischenpositionen zwischen der ersten Position und der zweiten Position aufweist und der Abstand zwischen dem sechsten Drehpunkt (P6) und dem siebten Drehpunkt (P7) an jeder Zwischenposition der erste Abstand ist und das zweite Verbindungsglied (L2) relativ zum ersten Winkel nicht vorgekippt ist.

3. Materialhandhabungsmaschine (10) nach Anspruch 2, wobei das zweite Verbindungsglied (L2) an jeder Zwischenposition relativ zum ersten Winkel nicht mehr als 4° rückgekippt ist.

4. Materialhandhabungsmaschine (10), enthaltend ein Werkzeugmanövriergerät (16), das Werkzeugmanövriergerät enthaltend:
eine Halterung (20),
ein erstes Verbindungsglied (L1),
ein zweites Verbindungsglied (L2),
ein drittes Verbindungsglied (L3),
ein viertes Verbindungsglied (L4) und
ein fünftes Verbindungsglied (L5),
wobei das erste Verbindungsglied (L1) schwenkbar relativ zur Halterung an einem ersten Drehpunkt (P1) befestigt ist,
das zweite Verbindungsglied (L2) schwenkbar relativ zum ersten Verbindungsglied (L1) an einem zweiten Drehpunkt (P2) befestigt ist,
das dritte Verbindungsglied (L3) schwenkbar relativ zum zweiten Verbindungsglied (L2) an einem dritten Drehpunkt (P3) befestigt ist,
das vierte Verbindungsglied (L4) schwenkbar relativ zum dritten Verbindungsglied (L3) an einem vierten Drehpunkt (P4) befestigt ist,
das vierte Verbindungsglied (L4) schwenkbar relativ zum ersten Verbindungsglied (L1) an einem fünften Drehpunkt (P5) befestigt ist,
das fünfte Verbindungsglied (L5) schwenkbar relativ zum vierten Verbindungsglied (L4) an einem sechsten Drehpunkt (P6) befestigt ist,
das fünfte Verbindungsglied (L5) schwenkbar relativ zur Halterung an einem siebten Drehpunkt (P7) befestigt ist,
der fünfte Drehpunkt (P5) am ersten Verbindungsglied (L1) zwischen dem ersten und zweiten Drehpunkt angeordnet ist,
der sechste Drehpunkt (P6) am vierten Verbindungsglied (L4) zwischen dem vierten und fünften Drehpunkt angeordnet ist,
der Abstand zwischen dem dritten und vierten Drehpunkt ein festgelegter Abstand M ist,
der Abstand zwischen dem ersten und zweiten Drehpunkt ein festgelegter Abstand ist,
der Abstand zwischen dem ersten und fünften Drehpunkt ein festgelegter Abstand ist,
der Abstand zwischen dem zweiten und fünften Drehpunkt ein festgelegter Abstand ist,
**dadurch gekennzeichnet, dass** der Abstand zwischen dem zweiten und dritten Drehpunkt ein festgelegter Abstand 0,418 M ± 2 % ist,
der Abstand zwischen dem vierten und sechsten Drehpunkt ein festgelegter Abstand 0,294 M ± 2 % ist,
der Abstand zwischen dem fünften und sechsten Drehpunkt ein festgelegter Abstand 0,439 M ± 2 % ist,
der Abstand zwischen dem ersten und siebten Drehpunkt ein festgelegter Abstand 0,317 M ± 2 % ist,
der Abstand zwischen dem sechsten und siebten Drehpunkt variiert werden kann,
eine erste Linie (A) zwischen dem ersten und zweiten Drehpunkt definiert ist, der fünfte Drehpunkt (P5) auf derselben Seite der ersten Linie (A) wie der vierte Drehpunkt (P4) angeordnet ist,
eine zweite Linie (B) zwischen dem vierten und fünften Drehpunkt definiert ist, der sechste Drehpunkt (P6) auf derselben Seite der zweiten Linie (B) wie der siebte Drehpunkt (P7) angeordnet ist, ein senkrechter Abstand zwischen der zweiten Linie und dem sechsten Drehpunkt (P6) 0,066 M ± 10 % beträgt,
der zweite, der dritte, der vierte und der fünfte Drehpunkt (P2, P3, P4, P5) ein Viereck bilden, bei dem alle Innenwinkel kleiner als 180° sind,
der erste, der fünfte, der sechste und der siebte Drehpunkt (P1, P5, P6, P7) ein Viereck bilden, bei dem alle Innenwinkel kleiner als 180° sind,
der siebte Drehpunkt (P7) höher angeordnet ist als der erste Drehpunkt (P1),
wobei der Mechanismus aufweist:
eine erste Position, an der die erste Linie (A) um 24° (F") relativ zu einer zwischen dem ersten und siebten Drehpunkt gezogenen Linie (C) abgewinkelt ist, und der Abstand zwischen dem sechsten und dem siebten Drehpunkt ein zweiter Abstand ist und eine zwischen dem ersten und siebten Drehpunkt gezogene Linie (C) in einem ersten Winkel (E) relativ zu einer zwischen dem zweiten und dem dritten Drehpunkt gezogenen Linie angewinkelt ist, und
eine zweite Position, an der die erste Linie (A) um 127° (F'") relativ zu der zwischen dem ersten und siebten Drehpunkt gezogenen Linie (C) abgewinkelt ist, und der Abstand zwischen dem sechsten und dem siebten Drehpunkt der zweite Abstand ist und wobei sich das zweite Verbindungsglied (L2) weniger als 1° relativ zum ersten Winkel des zweiten Verbindungsglieds (L2) vorgekippt hat und/oder weniger als 0,5° relativ zum ersten Winkel des zweiten Verbindungsglieds (L2) rückgekippt hat.

5. Materialhandhabungsmaschine (10) nach Anspruch 4, wobei das Gerät eine Vielzahl von Zwischenpositionen zwischen der ersten Position und der zweiten Position aufweist und der Abstand zwischen dem sechsten Drehpunkt (P6) und dem siebten Drehpunkt (P7) an jeder Zwischenposition der zweite Abstand ist und das zweite Verbindungsglied (L2) nicht um mehr als 3,5° relativ zum ersten Winkel vorgekippt ist.

6. Materialhandhabungsmaschine (10) nach Anspruch 5, wobei das zweite Verbindungsglied (L2) an jeder Zwischenposition relativ zum ersten Winkel nicht mehr als 0,5° rückgekippt ist.

7. Materialhandhabungsmaschine (10) nach Anspruch 1 oder 4, wobei:
der Abstand zwischen dem ersten und dem zweiten Drehpunkt zwischen 2,283 M ± 0,3 % und 2,607 M ± 0,3 % beträgt und/oder
der Abstand zwischen dem ersten und dem fünften Drehpunkt zwischen 1,626 M ± 0,4 % und 1,965 M ± 0,4 % beträgt und/oder
der Abstand zwischen dem zweiten und dem fünften Drehpunkt zwischen 0,675 M ± 1,0 % und 0,663 M ± 1,0 % beträgt und/oder
ein senkrechter Abstand zwischen der ersten Linie (A) und dem fünften Drehpunkt zwischen 0,131 M ± 5 % und 0,146 M ± 5 % beträgt.

8. Materialhandhabungsmaschine (10) nach Anspruch 1 oder 4, wobei:
der Abstand zwischen dem ersten und dem zweiten Drehpunkt (P1, P2) 2,283 M ± 0,3 % beträgt und/oder
der Abstand zwischen dem ersten und dem fünften Drehpunkt (P1, P5) 1,626 M ± 0,4 % beträgt und/oder
der Abstand zwischen dem zweiten und dem fünften Drehpunkt (P2, P5) 0,675 M ± 1,0 % beträgt und/oder
ein senkrechter Abstand zwischen der ersten Linie (A) und dem fünften Drehpunkt (P5) 0,131 M ± 5 % beträgt.

9. Materialhandhabungsmaschine (10) nach Anspruch 1 oder 8, wobei der erste Abstand 1,552 M beträgt.

10. Materialhandhabungsmaschine (10) nach Anspruch 1 oder 8 wenn abhängig von Anspruch 4, wobei der zweite Abstand 1,501 M beträgt.

11. Materialhandhabungsmaschine (10) nach Anspruch 1 oder 4, wobei:
der Abstand zwischen dem ersten und dem zweiten Drehpunkt (P1, P2) 2,607 M ± 0,3 % beträgt und/oder
der Abstand zwischen dem ersten und dem fünften Drehpunkt (P1, P5) 1,965 M ± 0,4 % beträgt und/oder
der Abstand zwischen dem zweiten und dem fünften Drehpunkt (P2, P5) 0,663 M ± 1,0 % beträgt und/oder
ein senkrechter Abstand zwischen der ersten Linie (A) und dem fünften Drehpunkt 0,146 M ± 5 % beträgt.

12. Materialhandhabungsmaschine (10) nach Anspruch 1 oder 11, wobei der erste Abstand 1,863 M beträgt.

13. Materialhandhabungsmaschine (10) nach Anspruch 1 oder 11 wenn abhängig von Anspruch 4, wobei der zweite Abstand 1,829 M beträgt.

## Revendications

1. Machine de manipulation de matériaux (10) comprenant un appareil de manoeuvre d'outil (16), l'appareil de manoeuvre d'outil comprenant
un support (20),
une première pièce de liaison (L1),
une seconde pièce de liaison (L2),
une troisième pièce de liaison (L3),
une quatrième pièce de liaison (L4) et
une cinquième pièce de liaison (L5),
la première pièce de liaison (L1) étant montée de manière pivotante par rapport au support au niveau d'un premier pivot (P1),
la seconde pièce de liaison (L2) étant montée de manière pivotante par rapport à la première pièce de liaison (L1) au niveau d'un second pivot (P2),
la troisième pièce de liaison (L3) étant montée de manière pivotante par rapport à la seconde pièce de liaison (L2) au niveau d'un troisième pivot (P3),
la quatrième pièce de liaison (L4) étant montée de manière pivotante par rapport à la troisième pièce de liaison (L3) au niveau d'un quatrième pivot (P4),
la quatrième pièce de liaison (L4) étant montée de manière pivotante par rapport à la première pièce de liaison (L1) au niveau d'un cinquième pivot (P5),
la cinquième pièce de liaison (L5) étant montée de manière pivotante par rapport à la quatrième pièce de liaison (L4) au niveau d'un sixième pivot (P6),
la cinquième pièce de liaison (L5) étant montée de manière pivotante par rapport au support au niveau d'un septième pivot (P7), le cinquième pivot (P5) étant situé sur la première pièce de liaison (L1) entre les premier et second pivots,
le sixième pivot (P6) étant situé sur la quatrième pièce de liaison (L4) entre les quatrième et cinquième pivots,
une distance entre les troisième et quatrième pivots étant une distance fixe M,
une distance entre les premier et second pivots étant une distance fixe,
une distance entre les premier et cinquième pivots étant une distance fixe,
une distance entre les second et cinquième pivots étant une distance fixe,
**caractérisée en ce qu'**une distance entre les second et troisième pivots est une distance fixe de 0,418 M ± 2%,
une distance entre les quatrième et sixième pivots est une distance fixe de 0,294 M ± 2%,
une distance entre les cinquième et sixième pivots est une distance fixe de 0,439 M ± 2%,
une distance entre les premier et septième pivots est une distance fixe de 0,317 M ± 2%,
une distance entre les sixième et septième pivots étant susceptible d'être réglée,
une première ligne (A) étant définie entre les premier et second pivots, le cinquième pivot (P5) étant positionné sur un même côté de la première ligne (A) que le quatrième pivot (P4),
une seconde ligne (B) étant définie entre les quatrième et cinquième pivots, le sixième pivot (P6) étant positionné sur un même côté de la seconde ligne (B) que le septième pivot (P7), une distance perpendiculaire entre la seconde ligne et le sixième pivot (P6) est de 0,066 M ± 10%,
les second, troisième, quatrième et cinquième pivots (P2, P3, P4, P5) formant un quadrilatère, dans lequel tous les angles internes sont inférieurs à 180°,
les premier, cinquième, sixième et septième pivots (P1, P5, P6, P7) formant un quadrilatère, dans lequel tous les angles internes sont inférieurs à 180°,
le septième pivot (P7) étant positionné plus haut que le premier pivot (P1),
le mécanisme ayant :
une première position où la première ligne (A) est inclinée de 24° (F) par rapport à une ligne (C) tracée entre les premier et septième pivots, et la distance entre les sixième et septième pivots est une première distance et une ligne (C) tracée entre les premier et septième pivots est inclinée au niveau d'un premier angle (E) par rapport à une ligne tracée entre les second et troisième pivots, et
une seconde position où la première ligne (A) est inclinée de 127° (F') par rapport à la ligne (C) tracée entre les premier et septième pivots, et la distance entre les sixième et septième pivots est ladite première distance et, dans laquelle la seconde pièce de liaison (L2) a basculé vers l'arrière de moins de 4° par rapport au premier angle de la seconde pièce de liaison (L2).

2. Machine de manipulation de matériaux (10) selon la revendication 1, dans laquelle l'appareil a une pluralité de positions intermédiaires entre la première position et la seconde position et, à chaque position intermédiaire, la distance entre le sixième pivot (P6) et le septième pivot (P7) est ladite première distance et la seconde pièce de liaison (L2) n'a pas basculé vers l'avant par rapport au premier angle.

3. Machine de manipulation de matériaux (10) selon la revendication 2, dans laquelle, à chaque position intermédiaire, la seconde pièce de liaison (L2) n'a pas basculé vers l'arrière de plus de 4° par rapport au premier angle.

4. Machine de manipulation de matériaux (10) comprenant un appareil de manoeuvre d'outil (16), l'appareil de manoeuvre d'outil (16) comprenant :
un support (20),
une première pièce de liaison (L1),
une seconde pièce de liaison (L2),
une troisième pièce de liaison (L3),
une quatrième pièce de liaison (L4) et
une cinquième pièce de liaison (L5),
la première pièce de liaison (L1) étant montée de manière pivotante par rapport au support au niveau d'un premier pivot (P1),
la seconde pièce de liaison (L2) étant montée de manière pivotante par rapport à la première pièce de liaison (L1) au niveau d'un second pivot (P2),
la troisième pièce de liaison (L3) étant montée de manière pivotante par rapport à la seconde pièce de liaison (L2) au niveau d'un troisième pivot (P3),
la quatrième pièce de liaison (L4) étant montée de manière pivotante par rapport à la troisième pièce de liaison (L3) au niveau d'un quatrième pivot (P4),
la quatrième pièce de liaison (L4) étant montée de manière pivotante par rapport à la première pièce de liaison (L1) au niveau d'un cinquième pivot (P5),
la cinquième pièce de liaison (L5) étant montée de manière pivotante par rapport à la quatrième pièce de liaison (L4) au niveau d'un sixième pivot (P6),
la cinquième pièce de liaison (L5) étant montée de manière pivotante par rapport au support au niveau d'un septième pivot (P7),
le cinquième pivot (P5) étant situé sur la première pièce de liaison (L1) entre les premier et second pivots,
le sixième pivot (P6) étant situé sur la quatrième pièce de liaison (L4) entre les quatrième et cinquième pivots,
une distance entre les troisième et quatrième pivots étant une distance fixe M,
une distance entre les premier et second pivots étant une distance fixe,
une distance entre les premier et cinquième pivots étant une distance fixe,
une distance entre les second et cinquième pivots étant une distance fixe,
**caractérisée en ce qu'**une distance entre les second et troisième pivots est une distance fixe de 0,418 M ± 2%,
une distance entre les quatrième et sixième pivots est une distance fixe de 0,294 M ± 2%,
une distance entre les cinquième et sixième pivots est une distance fixe de 0,439 M ± 2%,
une distance entre les premier et septième pivots est une distance fixe de 0,317 M ± 2%,
une distance entre les sixième et septième pivots étant susceptible d'être réglée,
une première ligne (A) étant définie entre les premier et second pivots, le cinquième pivot (P5) étant positionné sur un même côté de la première ligne (A) que le quatrième pivot (P4),
une seconde ligne (B) étant définie entre les quatrième et cinquième pivots, le sixième pivot (P6) étant positionné sur un même côté de la seconde ligne (B) que le septième pivot (P7), une distance perpendiculaire entre la seconde ligne et le sixième pivot (P6) est de 0,066 M ± 10%,
les second, troisième, quatrième et cinquième pivots (P2, P3, P4, P5) formant un quadrilatère dans lequel tous les angles internes sont inférieurs à 180°,
les premier, cinquième, sixième et septième pivots (P1, P5, P6, P7) formant un quadrilatère dans lequel tous les angles internes sont inférieurs à 180°,
le septième pivot (P7) étant positionné plus haut que le premier pivot (P1),
le mécanisme ayant :
une première position où la première ligne (A) est inclinée de 24° (F") par rapport à une ligne (C) tracée entre les premier et septième pivots, et la distance entre les sixième et septième pivots est une seconde distance et une ligne (C) tracée entre les premier et septième pivots est inclinée au niveau d'un premier angle (E) par rapport à une ligne tracée entre les second et troisième pivots, et
une seconde position où la première ligne (A) est inclinée de 127° (F"') par rapport à la ligne (C) tracée entre les premier et septième pivots, et la distance entre les sixième et septième pivots est ladite seconde distance et, dans laquelle la seconde pièce de liaison (L2) a basculé vers l'avant de moins de 1° par rapport au premier angle de la seconde pièce de liaison, et/ou a basculé vers l'arrière de moins de 0,5° par rapport au premier angle de la seconde pièce de liaison (L2).

5. Machine de manipulation de matériaux (10) selon la revendication 4, dans laquelle l'appareil a une pluralité de positions intermédiaires entre la première position et la seconde position et, à chaque position intermédiaire, la distance entre le sixième pivot (P6) et le septième pivot (P7) est ladite seconde distance et la seconde pièce de liaison (L2) n'a pas basculé vers l'avant de plus de 3,5° par rapport au premier angle.

6. Machine de manipulation de matériaux (10) selon la revendication 5, dans laquelle, à chaque position intermédiaire, la seconde pièce de liaison (L2) n'a pas basculé vers l'arrière de plus de 0,5° par rapport au premier angle.

7. Machine de manipulation de matériaux (10) selon la revendication 1 ou 4, dans laquelle :
la distance entre les premier et second pivots se situe entre 2,283 M ± 0,3% et 2,607 M ± 0,3%, et/ou la distance entre les premier et cinquième pivots se situe entre 1,626 M ± 0,4% et 1,965 M ± 0,4%, et/ou la distance entre les second et cinquième pivots se situe entre 0,675 M ± 1,0% et 0,663 M ± 1,0%, et/ou une distance perpendiculaire entre la première ligne (A) et le cinquième pivot se situe entre 0,131 M ± 5% et 0,146 M ± 5%.

8. Machine de manipulation de matériaux (10) selon la revendication 1 ou 4, dans laquelle :
la distance entre les premier et second pivots (P1, P2) est de 2,283 M ± 0,3%, et/ou
la distance entre les premier et cinquième pivots (P1, P5) est de 1,626 M ± 0,4%, et/ou
la distance entre les second et cinquième pivots (P2, P5) est de 0,675 M ± 1,0%, et/ou
une distance perpendiculaire entre la première ligne (A) et le cinquième pivot (P5) est de 0,131 M ± 5%.

9. Machine de manipulation de matériaux (10) selon la revendication 1 ou 8, dans laquelle la première distance est de 1,552 M.

10. Machine de manipulation de matériaux (10) selon la revendication 1 ou 8, lorsqu'elle dépend de la revendication 4, dans laquelle la seconde distance est de 1,501 M.

11. Machine de manipulation de matériaux (10) selon la revendication 1 ou 4, dans laquelle :
la distance entre les premier et second pivots (P1, P2) est de 2,607 M ± 0,3%, et/ou
la distance entre les premier et cinquième pivots (P1, P5) est de 1,965 M ± 0,4%, et/ou
la distance entre les second et cinquième pivots (P2, P5) est de 0,663 M ± 1,0%, et/ou
une distance perpendiculaire entre la première ligne (A) et le cinquième pivot est de 0,146 M ± 5%.

12. Machine de manipulation de matériaux (10) selon la revendication 1 ou 11, dans laquelle la première distance est de 1,863 M.

13. Machine de manipulation de matériaux (10) selon la revendication 1 ou 11, lorsqu'elle dépend de la revendication 4, dans laquelle la seconde distance est de 1,829 M.
